# EUROPEAN PATENT APPLICATION

(11) **EP 3 831 214 A1**
(43) Date of publication of application: **09.06.2021**
(21) Application number: 19843106.6
(22) Date of filing: 01.08.2019
(51) Int. Cl.: A23L 2/58, A23F 3/14, A23F 3/18, A23L 2/00, A23L 2/04, A23L 5/41

(54) **METHOD FOR PRODUCING PLANT EXTRACT THAT CONTAINS CHLOROPHYLL**

(30) Priority: 03.08.2018 JP 2018147182
(71) Applicant: Suntory Holdings Limited, Osaka 530-8203 (JP)
(72) Inventor: KOBAYASHI, Shinichi, Kawasaki-shi, Kanagawa 211-0067 (JP); UEMOTO, Sohei, Kawasaki-shi, Kanagawa 211-0067 (JP); YOSHIMOTO, Norihiko, Kawasaki-shi, Kanagawa 211-0067 (JP)
(74) Representative: Vossius & Partner Patentanwälte Rechtsanwälte mbB
(86) International application number: PCT/JP2019/030296
(87) International publication number: WO 2020/027283

(57) **Abstract**

An object of the present invention is to provide a method for producing a chlorophyll-containing liquid plant extract which has a refreshing cooling sensation and can be used as a source material for beverages packed in clear packages.

Provided is a method for producing a chlorophyll-containing liquid plant extract, the method comprising: a grinding step of grinding a chlorophyll-containing plant to give a plant powder; a suspension step of suspending the plant powder in a zinc-containing solution; and a solid-liquid separation step of separating the obtained suspension into a solid fraction and a liquid fraction.

## Description

### TECHNICAL FIELD

The present invention relates to a method for producing a liquid extract of a plant containing chlorophyll.

### BACKGROUND ART

There have been a wide variety of beverages launched in the market due to diversified consumer preferences and increased health consciousness. Particular attention has been paid to green plants containing chlorophyll from the viewpoint that they can help complement an inadequate intake of vegetables. Many packaged beverages incorporating finely ground green plants have also been launched in the market. However, chlorophyll, which has magnesium as its central metal ion, is highly unstable to light and can easily photodegrade and lose its color, and thus, it has a disadvantage in that it cannot maintain its bright green color for a long period of time. Copper chlorophyll, in which magnesium in the chlorophyll molecule is replaced with copper, is allowed to be used as a food additive (coloring agent). However, this agent is unusable in beverages, since beverages are not included within the scope of items in which this agent is allowed to be used. Therefore, there have been proposed some methods for maintaining the green color of packaged beverages incorporating a chlorophyll-containing plant, such as: a method that involves adding vitamin C (PTL 1); a method that involves adding a metal ion (PTL 2); a method that involves adding a combination of zinc and a vitamin (PTL 3); and a method that involves adding starch (PTL 4).

Further, it has been reported that by providing a zinc ion and/or a copper ion in at least one form selected from a metal yeast, a gluconate, a sulfate and the like, and adding the ion(s) to a liquid extract from non-fermented tea leaves to allow metals in the extract to be replaced with a zinc ion and/or a copper ion, there can be produced a tea beverage in the form of a packaged beverage, which has a higher degree of green color and a more pleasant flavor than conventional products (PTL 5).

Meanwhile, there have been proposed methods for producing a liquid tea extract with good flavor through solid-liquid separation of a suspension of fine tea leaf particles (PTLs 6, 7).

### CITATION LIST

### PATENT LITERATURES

PTL 1: Japanese Unexamined Patent Application Publication No. JP 2000-228953
PTL 2: Japanese Unexamined Patent Application Publication No. JP 2009-165439
PTL 3: Japanese Unexamined Patent Application Publication No. JP 2014-54200
PTL 4: Japanese Unexamined Patent Application Publication No. JP 2016-140325
PTL 5: Japanese Unexamined Patent Application Publication No. JP 2005-333862
PTL 6: Japanese Unexamined Patent Application Publication No. JP H03-108444
PTL 7: International Patent Publication No. WO 2004/110161

### SUMMARY OF INVENTION

### TECHNICAL PROBLEM

In recent years, most beverage products are packaged in clear PET bottles. In the case of beverages packed in clear packages, the color of beverage is an important element for their commercial value.

An object of the present invention is to provide a method for producing a chlorophyll-containing liquid plant extract which has a refreshing cooling sensation and can be used as a source material for beverages packed in clear packages.

### SOLUTION TO PROBLEM

The present inventors have made intensive studies for achieving the aforementioned object, and as a result, surprisingly found that when a finely ground plant containing chlorophyll is suspended in a solution containing zinc, liposoluble chlorophyll elutes in large volumes and converts into zinc chlorophyll. The inventors further found that when the thus-obtained suspension liquid containing zinc chlorophyll at high concentrations is subjected to solid-liquid separation, there can be obtained a solution having a bright green color and a high degree of clarity. Thus, the inventors have completed the present invention. This invention is directed, but not limited, to the following.
(1) A method for producing a chlorophyll-containing liquid plant extract, the method comprising the following steps (a) to (c):
   step (a): a grinding step of grinding a chlorophyll-containing plant to give a plant powder;
   step (b): a suspension step of suspending the plant powder in a zinc-containing solution; and
   step (c): a solid-liquid separation step of separating the obtained suspension into a solid fraction and a liquid fraction.
(2) The method as set forth in (1), wherein the chlorophyll-containing plant is a tea leaf.
(3) The method as set forth in (1) or (2), wherein the zinc is added in the form of a zinc yeast.
(4) A liquid plant extract obtained by the method as set forth in any one of (1) to (3).
(5) A beverage comprising the liquid plant extract as set forth in (4).
(6) A method for producing a beverage, the method comprising the step of incorporating a liquid plant extract obtained by the method as set forth in any one of (1) to (3).

### ADVANTAGEOUS EFFECTS OF INVENTION

According to the present invention, a liquid plant extract that is rich in chlorophyll having good color-producing ability and has a bright green color and a high degree of clarity can be produced without involving complicated steps. The liquid plant extract obtained by the method of this invention can be incorporated in beverages and provided in the form of beverages packed in clear packages.

### BRIEF DESCRIPTION OF DRAWINGS

[FIG. 1] FIG. 1 depicts a photograph of sample 1 prepared in Test Example 1.
[FIG. 2] FIG. 2 depicts photographs of the residues that remained after centrifugation of samples 1 and 2.
[FIG. 3] FIG. 3 depicts a graph that shows the chlorophyll contents in samples 1 and 21.
[FIG. 4] FIG. 4 depicts a graph that shows the chlorophyll contents in samples 22 and 23.
[FIG. 5] FIG. 5 depicts a graph that shows the chlorophyll contents in different samples prepared through varying the suspension temperature.

### DESCRIPTION OF EMBODIMENTS

One aspect of the present invention is directed to a method for producing a chlorophyll-containing liquid plant extract, the method comprising the following steps (a) to (c):
step (a): a grinding step of grinding a chlorophyll-containing plant to give a plant powder;
step (b): a suspension step of suspending the plant powder in a zinc-containing solution; and
step (c): a solid-liquid separation step of separating the obtained suspension into a solid fraction and a liquid fraction.

The method for producing a liquid plant extract according to the present invention will be described in detail. Unless otherwise stated herein, all numerical ranges are inclusive of their endpoints.

### ((a) Grinding step)

In the present invention, a chlorophyll-containing plant is used. Chlorophyll is a chemical substance that has the role of absorbing light energy in the light reaction of photosynthesis, and is also called green blood. Chlorophyll has a basic structure in which a long-chain alcohol called phytol is ester-bonded to tetrapyrrole, which is formed from four pyrroles arranged in a cyclic fashion.

Examples of a chlorophyll-containing plant that can be used include edible green plants, such as spinach, comfrey, alfalfa, kale, barley grass, wheat grass, *Angelica keiskei,* mulberry green leaves, and tea leaves. In the present invention, one type of such chlorophyll-containing plants can be used alone, or two or more types of them can be used in combination. From the viewpoint that a high refreshing cooling sensation, which is one of the effects characteristic of this invention, can be exhibited markedly, tea leaves with low grassiness are advantageously used. *Inter alia,* (non-fermented) green tea leaves are preferably used. Specific examples of green tea leaves include, but arc not limited to, *Gyokuro* (refined green tea), *Kabuse-cha* (shaded green tea), *Tencha* (non-ground tea leaves used for *Matcha*), *Fukamushi-cha* (long-steamed green tea), *Sencha* (brewed green tea), *Bancha* (coarse green tea), *Kamairi-cha* (pot-roasted green teas), and Chinese green teas (*e.g.*, Longjing tea).

The present invention is characterized by simply producing an edible liquid having a bright green color and a high degree of clarity through efficiently eluting chlorophyll from a chlorophyll-containing plant. The plant used as a source material for chlorophyll extraction is preferably a plant having a high chlorophyll content. For example, in the case where green tea leaves are used as the plant, *Fukamushi-cha* (including *Tokumushi-cha* (particularly long-steamed green tea), *Gokumushi-cha* (extremely long-steamed green tea)) or *Tencha* is advantageously used. The degree of green color of green tea leaves is decisively influenced by steaming performed during the process of producing *Aracha* (crude tea). Steaming is a step at which tea leaves are evenly steamed with a non-pressurized vapor for the purposes of deactivating the activity of an oxidase and removing the grassiness of the tea leaves while allowing the tea leaves to maintain its green color. The degree of green color is determined by the length of time for this steaming step. When tea leaves are treated by *Asamushi* streaming, which is a light steaming process performed for a short period of time of about 20 to 30 seconds, a liquid extract made from the treated tea leaves will have a clear soft green color. As tea leaves are treated by a longer-term steaming process, such as *Chumushi* steaming (a moderate (normal) steaming process performed for about 30 to 40 seconds), *Fukamushi* steaming (a long steaming process performed for about 40 to 60 seconds), *Tokumushi* steaming (a particularly long steaming process performed for about 90 to 120 seconds), and *Gokumushi* steaming (a two-step steaming process performed for about 140 to 160 seconds), a liquid extract made from such treated tea leaves will have a denser, darker green color. In contrast, when tea leaves are treated by a *Kamairi* process, which is a process that stops fermentation of tea leaves not by steaming but by roasting in a roasting pot, a liquid extract made from *Kamairi-cha* tea leaves will have a bright light-yellow color, and will not have a green color. Therefore, when green tea leaves arc used as a chlorophyll-containing plant in this invention, green tea leaves treated by a longer-term steaming process (*Fukamushi-cha*, *Tokumushi-cha, Gokumushi-cha*) are preferably used. The degree of green color of green tea leaves is also influenced by final rolling performed during the process of producing *Aracha.* As green tea leaves are rolled for a shorter period of time, the green tea leaves will have better color-producing ability, and a liquid extract made from the tea leaves will have a brighter liquor color. Therefore, *Tencha* (*Matcha*)*,* which is made of tea leaves dried without rolling, is advantageously used as a plant in this invention.

At the grinding step of the present invention, the aforementioned chlorophyll-containing plant (e.g., *Tencha*) is ground to give a plant powder. The type of a grinding means is not particularly limited, as long as it is a means capable of grinding a plant into a particle size of not more than 100 µm, preferably not more than 50 µm, more preferably not more than 30 µm, to thereby destruct the cell membranes of the plant such that chlorophyll can be eluted easily. Both dry grinding and wet grinding can be adopted. To be specific, the grinding step can be done using a stone mill, a pin mill, a ball mill, a hammer mill, a cutter mill, a homogenizer, or the like.

### ((b) Suspension step)

At the suspension step of the present invention, the plant powder obtained at the grinding step (a) is suspended in a zinc-containing solution to give a suspension. By adding zinc to the plant powder, magnesium ions in the centers of the porphyrin rings of chlorophyll molecules in the plant powder are replaced with zinc ions, thereby leading to the stabilization of chlorophyll and enhancing elution of chlorophyll into a suspension.

As referred to herein, the term "chlorophyll" refers to chlorophyll a (C₅₅H₇₂O₅N₄M) and chlorophyll b (C₅₅H₇₀O₆N₄M) (in both of the above formulas, M represents a central metal). Further, the concentration of chlorophyll refers to the total amount of chlorophyll a and chlorophyll b. When zinc is used in the present invention, the concentration of chlorophyll refers more specifically to the total amount of chlorophyll a and chlorophyll b which contain magnesium (mg) as a central metal, as well as zinc chlorophyll a and zinc chlorophyll b in which mg as a central metal is rcplaccd with zinc. The content of chlorophyll in a solution can be quantified by HPLC.

The solution used at this step is water, a water-soluble organic solvent, or a mixture thereof. At the suspension step of the present invention, zinc may be mixed in a solution in which a plant powder has been mixed beforehand, or a plant powder may be mixed in a solution in which zinc has been mixed beforehand, or zinc and a plant powder may be simultaneously mixed together in a solution.

The zinc used in the present invention may be added as an elemental substance, but is preferably added in the form of a water-soluble salt such as gluconate, sulfate, zinc chloride, or citrate, or in the form of a yeast such as baker's yeast, brewing yeast, or other zinc-containing yeasts. From the viewpoint of enhancing elution of chlorophyll, it is preferable to add zinc in the form of a yeast or a yeast extract (hereinafter also referred to as "yeast essence"), and it is particularly preferable to use a zinc-containing yeast (also referred to as "zinc-rich yeast") or an extract thereof. Examples of such zinc-containing yeasts (hereinafter also referred to as "zinc yeast") that are commercially available include those containing insolubles and those water-soluble yeasts (*i.e.*, zinc yeast essence), and both types of the aforementioned yeasts can be used in this invention. Examples of zinc yeasts containing insolubles include, but are not particularly limited to, Mineral Yeast Series (Zinc) (Oriental Yeast Co., Ltd.), Zinc Yeast 10% (Medience Corporation), and High Zinc Yeast (Grow Company, Inc.). Examples of water-soluble zinc yeasts include, but are not particularly limited to, the mineral yeast essence "Yeast Rich Series (Zinc)" (Oriental Yeast Co., Ltd.), and Soluble Zinc Yeast (Grow Company, Inc.).

The suspension step of the present invention is characterized by suspending a plant powder in a zinc-containing solution. It is considered that when a plant ground in a powder form is suspended in a zinc-containing solution, the plant is softened to render the cell membranes of the plant easily destructible, so that chlorophyll, which is liposoluble and difficult to elute, can be eluted easily into a suspension. As seen from the above, this invention is characterized by using a zinc yeast as an agent for promoting extraction of bright green color from a plant. Chlorophyll, which has good color-producing ability, can be extracted from different plants (*e.g.,* tea leaves).

Notably, in a warmed solution, the plant is softened more easily to render cell membranes easily destructible; therefore, the temperature of a suspension is preferably in the range of from 20 to 100°C, more preferably from 30 to 95°C or from 40 to 95°C, still more preferably from 40 to 90°C or from 60 to 90°C, especially preferably from 70 to 90°C.

From the viewpoint of promoting softening of a plant and destruction of cell membranes, the suspension is preferably subjected to stirring treatment. By performing stirring treatment, shearing stress is exerted on a plant to render chlorophyll easier to elute. Another advantage of the stirring treatment is that when tea leaves are used as a plant, stirring facilitates elution of hydrophilic polymeric components responsible for the characteristic profound taste of tea. As a stirring means, different types of stirrers commonly used in the production process of foods or the like can be used. Specific examples of stirrers include, but are not limited to, different types of mixers such as propeller agitators, rapid mixers, homogenizing mixers, and cutters, and different types of kneaders typified by kneaders, extruders, and turbulizers. *Inter alia*, mixers capable of high-speed stirring are preferably used.

The solution used to make a suspension is water, a water-soluble organic solvent, or a mixture thereof, with water being preferably used. Specific examples of water-soluble organic solvents include alcohols such as ethanol and methanol, ketones such as acetone, and esters such as ethyl acetate. *Inter alia*, alcohols and ketones are preferred, with ethanol being particularly preferred. The amount used of water, a water-soluble organic solvent, or a mixture thereof can be adjusted as appropriate, and is generally in the range of approximately from 5 to 100 wt. parts per wt. part of the plant powder.

The period of mixing a plant powder with a zinc-containing solution, or namely the suspension period, can be adjusted to an optimum value in consideration of various factors including the temperature of a suspension and the presence or absence of stirring, and is preferably not less than 1 minute, more preferably not less than 3 minutes, especially preferably not less than 5 minutes, from the viewpoint of enhancing the percentage of elution of chlorophyll. Also, from the viewpoint of productivity, the mixing period is preferably not more than 24 hours, more preferably not more than 12 hours. Typically, the mixing period is in the range of preferably from 1 minute to 24 hours, more preferably from 3 minutes to 12 hours, especially preferably from 5 minutes to 12 hours.

The zinc content in a suspension is in the range of preferably from 0.0001 to 1 wt. part, more preferably from 0.0005 to 0.5 wt. parts, especially preferably from 0.001 to 0.3 wt. parts, per wt. part of the plant powder. When a zinc yeast containing about 5% zinc is used as zinc, the amount added of the zinc yeast is in the range of approximately from 0.002 to 20 wt. parts, or from 0.001 to 10 wt. parts, per wt. part of the plant powder.

Additionally, when at the grinding step (a), wet grinding is performed to give a plant powder in a suspension form, the suspension step (b) may be performed by adopting a procedure in which a specified amount of zinc is added to the plant powder-containing suspension and the mixture is treated by warming and/or stirring depending on the need.

### ((c) Solid-liquid separation step)

At the solid-liquid separation step of the present invention, centrifugation or other filtration means can be used to separate the suspension obtained at the suspension step (b) into a solid fraction and a liquid fraction, whereby a liquid extract with a high degree of clarity can be obtained.

As a solid-liquid separation means, one or more means selected from centrifugation and other filtration means (*e.g*., ultrafiltration, microfiltration, precision filtration, reverse osmosis membrane filtration, electrodialysis, and membrane filtration with a biologically functional membrane or the like) can be used. Among them, centrifugation is preferably used from the viewpoints of, for example, less susceptibility to oxidative deterioration and ease of operation. Centrifugation can be performed under the conditions of, for example, a flow rate of 200 to 10000 L/h and a rotational speed of 5000 to 20000 rpm. By changing flow rate, rotational speed, centrifugal setting area (∑), and/or the like, the degree of clarity of a finally obtained liquid extract can be adjusted.

The liquid plant extract obtained through the aforementioned steps (a) (grinding step), (b) (suspension step), and (c) (solid-liquid separation step) is characterized by containing a high concentration of chlorophyll having good color-producing ability but by containing a low concentration of pheophytin (a chlorophyll derivative in which the central magnesium atom is detached and replaced with two hydrogen atoms) which causes color change to yellow-amber. The obtained liquid extract has a bright green color since, among the chlorophyll compounds mentioned above, chlorophyll a which appears blue-green is present in the liquid extract at a higher concentration relative to chlorophyll b which appears yellow-green.

The chlorophyll-containing liquid plant extract obtained by the method comprising the aforementioned production steps may be concentrated by removing part of water from the liquid extract, depending on various factors including the purpose of storage and the intended use of a beverage. As a concentration means, any conventionally known methods such as vacuum concentration (thin film concentration, flash concentration) and RO membrane concentration can be used. Vacuum concentration is preferably performed at a pressure of from 2 to 5 mPa and a temperature of from 10 to 70°C from the viewpoint of preventing deterioration of aroma. Further, the concentrate may be dried to a solid form. Furthermore, in the liquid extract production method of the present invention, an antioxidant, a pH adjustor, and/or other similar additives may be added depending on the type and desired quality characteristics of a beverage to be produced.

### (Beverage)

The beverage comprising a liquid plant extract according to the present invention can be produced by a production method comprising the steps (a) to (c) as mentioned above, and step (d): a formulation step of formulating the content of a beverage. Specific examples of production methods include: a method in which a liquid plant extract obtained through the grinding step (a), the suspension step (b) and the solid-liquid separation step (c) is subjected to the formulation step (d); and a method in which a suspension obtained by following the grinding step (a) and the suspension step (b) is subjected to the formulation step (d) followed by the solid-liquid separation step (c). Such exemplary methods arc not meant to be limiting, and the beverage of this invention can also be produced even by changing the order of the aforementioned steps or by adding a further step.

At the aforementioned formulation step, different optional additives (*e.g*., antioxidant, pH adjustor, preservative, flavorant) that can be mixed in beverages may be added, or when the liquid plant extract is a liquid concentrate, the extract may be diluted with water suitable for beverages to a concentration suitable for beverages.

The beverage comprising a liquid plant extract according to the present invention is clear with no cloudiness and gives a refreshing cooling sensation from the visual aspect, and therefore fits perfect in the early summer season with pronounced heat. As referred to herein, the "refreshing cooling sensation" refers to a sensation of refreshment and cooling felt from the appearance of a beverage. Since the beverage of this invention contains stable chlorophyll at high concentrations, this beverage can maintain its clear and bright green color for a long period of time. Also, since the beverage of this invention is low in the content of components resulting from degradation of chlorophyll and causing off-flavor, this beverage can maintain its flavor for a long period of time.

The beverage of the present invention, which has a high level of storage stability as mentioned above, is suitable for long-term storage at ordinary temperatures in the form of a packaged beverage. When the beverage of this invention is a packaged beverage, the production method for the packaged beverage comprises not only the steps (a) to (d) as mentioned above, but also a sterilization step (e) and a packaging step (f). The order of performing the sterilization and packaging steps can be selected, as appropriate, in consideration of the heat resistance of a package. Sterilization is done according to a conventional procedure and followed by packing in a package. To be specific, the sterilization step is carried out under the sterilization conditions stipulated in the Food Sanitation Law. Examples of a sterilizer that can be used include, but are not limited to, tube sterilizer, plate stabilizer, plate flash pasteurizer, and UHT (ultra-high temperature) sterilizing system. The heating temperature, treatment period, and other conditions can be selected, as appropriate, depending on the type of a beverage. In general, heating is done at a temperature of from 60 to 150°C for a period of from 1 second to 30 minutes. Any type of package can be used as long as it is a closed package capable of breaking contact between the content and the air. Examples of packages include clear packages such as PET bottle and glass bottle, and opaque packages such as can and paper package. Since the beverage of this invention renders an appearance with a refreshing cooling sensation to demanders through a package, it is preferable to pack the beverage in a clear or semi-clear PET bottle.

The beverage of the present invention is preferably, but not particularly limited to, a tea beverage, since tea leaves are preferably used as a plant. The "tea beverage" refers to a beverage containing a liquid extract from tea leaves, and specific examples of tea beverages include green tea, roasted tea, blended tea, barley tea, mate tea, jasmine tea, black tea, oolong tea, and du zhong tea. The tea beverage particularly preferred in this invention is a green tea beverage.

### EXAMPLES

Hereunder, the present invention will be specifically described in detail by way of examples, but this invention is not limited to these examples. Unless otherwise stated herein, all numerical ranges are inclusive of their endpoints.

### Test Example 1: Effects of zinc yeast (1)

As a plant powder, a *Matcha* powder made of tea leaves ground to an average particle size of 10 µm using a stone mill (a powdered form of *Tencha*) was used. The zinc used was a zinc yeast essence (Mineral Yeast Series (Zinc) containing 5% zinc; produced by Oriental Yeast Co., Ltd.), which is a water-soluble zinc yeast. 2.5 g of the *Matcha* powder was metered, mixed with 0.3 g of the zinc yeast essence and 80 times its volume of warm water (85°C), and suspended using a multipurpose stirring system (produced by PRIMIX Corporation; product name: "T.K. ROBO MIX"; engineering specification: T.K. homogenizing mixer; processing conditions: rotational speed 10,000 rpm × 5 min.)). Then, the resulting suspension was centrifuged in a centrifuge (produced by Kokusan Co. Ltd.; product name: "High-Speed Refrigerated Centrifuge H-9R"; processing conditions: a supernatant centrifuged at 6300 rpm for 2 min. was collected and filtrated through a filter (produced by 3M Japan Limited; product name: "Zeta Plus™ B90-10S")) to give a liquid extract with a high degree of clarity (sample 1). The liquid extract was heat sterilized and stored at 55°C for one week. The appearance of the liquid extract immediately after sterilization and after storage was evaluated by four panelists (+++: bright green; ++: somewhat bright green; +: somewhat yellowish green; ±: yellow to amber). After the evaluation on the appearance of the liquid extract was made by individual panelists, the final evaluation results were determined through discussion among all the panelists. It should be noted that the storage at 55°C for one week serves as an accelerated test for evaluating long-term storage (equivalent to storage at ordinary temperatures for three months). Another liquid extract (sample 1') was prepared by the same procedure except that the zinc yeast was replaced with a zinc yeast containing insolubles (Mineral Yeast Series (Zinc) containing 5% zinc; produced by Oriental Yeast Co., Ltd.), and then was evaluated for appearance. A further liquid extract was prepared as a control (sample 2) by the same procedure except for adding no zinc yeast, and then was evaluated for appearance.

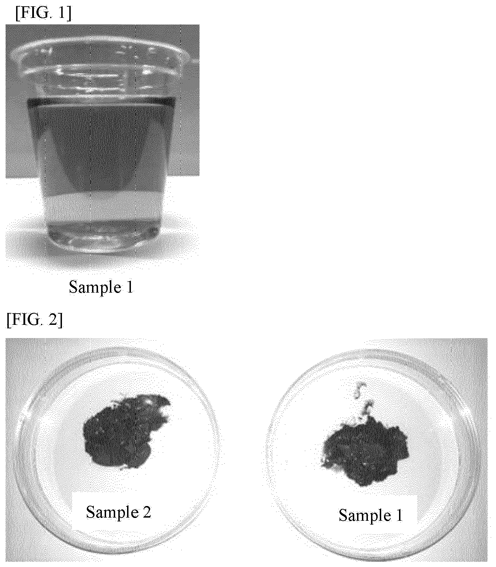

The results are shown in Table 1. Samples 1 and 1' prepared by suspending a liquid extract in a solution containing a zinc yeast essence had a bright green color with a refreshing cooling sensation (FIG. 1). In contrast, sample 2 prepared with no addition of a zinc yeast essence had a light yellow color. Sample 1 maintained its bright green liquor color after storage at 55°C for one week, and was rated as having a refreshing cooling sensation by all panelists. In contrast, sample 2 prepared without use of a zinc yeast had a yellow to amber color and lacked a refreshing cooling sensation. Additionally, as a result of observing the appearance of residues remaining after centrifuging the suspensions to obtain samples 1 and 2, both of the residues of these samples had a pale dark green color (FIG. 2). It was demonstrated that a zinc yeast does not exhibit expected effects on the enhancement and maintenance of the green color of *Matcha* tea leaf powder *per se*, but exhibits superior effects on the enhancement and maintenance of the degree of green color of a liquid extract from the tea leaves.

**[Table 1]**

| | | Sample 1 | Sample 1' | Sample 2 |
|---|---|---|---|---|
| Suspension conditions | Use of zinc yeast | Yes | Yes | No |
| | Temperature (°C) | 85 | 85 | 85 |
| | Period (min.) | 5 | 5 | 5 |
| | Amount of water (*n* times with respect to *Matcha*) | 80 | 80 | 80 |
| Evaluation results | Appearance (immediately after sterilization) | +++ | +++ | ± |
| | Appearance (after storage at 55°C for one week) | +++ to ++ | +++ to ++ | ± |

### Test Example 2: Effects of zinc yeast (2)

Different liquid extracts were prepared with addition of a zinc yeast essence (sample 3) or without addition of a zinc yeast essence (sample 4) by the same procedure as that for sample 1 in Test Example 1 except that the treatment period (suspension period) at the suspension step was changed to 10 minutes. The prepared liquid extracts were evaluated for appearance immediately after sterilization by following the same procedure as in Test Example 1. The results are shown in Table 2. Similar results to those in Test Example 1 were observed even when the treatment period at the suspension step was prolonged.

**[Table 2]**

| | | Sample 3 | Sample 4 |
|---|---|---|---|
| Suspension conditions | Use of zinc yeast | Yes | No |
| | Temperature (°C) | 85 | 85 |
| | Period (min.) | 10 | 10 |
| | Amount of water (*n* times with respect to *Matcha*) | 80 | 80 |
| Evaluation results | Appearance (immediately after sterilization) | +++ | ± |

### Test Example 3: Effects of suspension temperature

Different liquid extracts (samples 5 to 7) were prepared by the same procedure as that for sample 3 in Test Example 2 except that the treatment temperature at the suspension step was changed. The prepared liquid extracts were evaluated for appearance immediately after sterilization by following the same procedure as in Test Example 1. The results are shown in Table 3. Liquid extracts prepared through the suspension step at higher temperatures had a brighter green color.

**[Table 3]**

| | | Sample 3 | Sample 5 | Sample 6 | Sample 7 |
|---|---|---|---|---|---|
| Suspension conditions | Use of zinc yeast | Yes | Yes | Yes | Yes |
| | Temperature (°C) | 85 | 60 | 40 | 29 |
| | Period (min.) | 10 | 10 | 10 | 10 |
| | Amount of water (*n* times with respect to *Matcha*) | 80 | 80 | 80 | 80 |
| Evaluation results | Appearance (immediately after sterilization) | +++ | +++ | ++ | + |

### Test Example 4: Effects of the amount of suspension

A liquid extract (sample 8) was prepared by the same procedure as that for sample 3 in Test Example 2 except that the amount of water used at the suspension step was changed. The prepared liquid extract was evaluated for appearance immediately after sterilization by following the same procedure as in Test Example 1. The results are shown in Table 4. Similar effects were obtained even when the liquid amount of the suspension was small.

**[Table 4]**

| | | Sample 3 | Sample 8 |
|---|---|---|---|
| Suspension conditions | Use of zinc yeast | Yes | Yes |
| | Temperature (°C) | 85 | 85 |
| | Period (min.) | 10 | 10 |
| | Amount of water (*n* times with respect to *Matcha*) | 80 | 10 |
| Evaluation results | Appearance (immediately after sterilization) | +++ | +++ |

### Test Example 5: Effects of plant powder

A liquid extract (sample 9) was prepared by the same procedure as that for sample 1 in Test Example 1 except that the *Matcha* powder used to make sample 1 in Test Example 1 was replaced with a *Sencha* (*Fukamushi-cha*) tea leaf powder with an average particle size of 10 µm. The prepared liquid extract was evaluated for appearance immediately after sterilization and after storage by following the same procedure as in Test Example 1. Another liquid extract (sample 10) was also prepared by the same procedure except that the *Matcha* powder was replaced with *Tencha*, which is non-ground tea leaves used as a base material for *Matcha*, and the prepared liquid extract was evaluated in the same way. The results are shown in Table 5. It was found that although the plant used as a source material to prepare samples 1 and 10 was of the same type, sample 10 which was prepared with non-ground tea leaves did not present a bright green color. Additionally, all the panelists evaluated that when samples 1 and 9 were compared, sample 1 was brighter in green color than sample 9. The above results suggested that when green tea leaves are used as a source plant material for extraction, it is preferred to use ground leaves of *Tencha* green tea.

**[Table 5]**

| | | Sample 1 | Sample 9 | Sample 10 |
|---|---|---|---|---|
| | | *Matcha* | *Sencha* powder | *Tencha* |
| Suspension conditions | Use of zinc yeast | Yes | Yes | Yes |
| | Temperature (°C) | 85 | 85 | 85 |
| | Period (min.) | 5 | 5 | 5 |
| | Amount of water (*n* times with respect to tea leaves) | 80 | 80 | 30 |
| Evaluation results | Appearance (immediately after sterilization) | +++ | +++ | ± |

### Test Example 6: Effects of centrifugation

A liquid extract (sample 11) was prepared by the same procedure as that for sample 1 in Test Example 1 except that a suspension was not treated by centrifugation. The prepared liquid extract was evaluated for appearance immediately after sterilization by following the same procedure as in Test Example 1. Another liquid extract was also prepared by the same procedure as that for sample 11 except that the amount of a zinc yeast used was increased by 2 times to 0.6 g. The prepared liquid extract was evaluated in the same way. The results are shown in Table 6. A liquid extract prepared through the centrifugation treatment appeared markedly bright in green color. In contrast, those liquid extracts prepared without a centrifugation step were rated as lacking a refreshing cooling sensation by all panelists. This is because when no centrifugation was performed, the pale dark green color of *Matcha* powder affected the liquor color of liquid extracts, resulting in deterioration of the brightness of green color and the degree of clarity of the liquid extracts.

**[Table 6]**

| | | Sample 1 | Sample 11 | Sample 12 |
|---|---|---|---|---|
| Suspension conditions | Use of zinc yeast | Yes | Yes | Yes |
| | | 0.3 g | 0.3 g | 0.6 g |
| | Temperature (°C) | 85 | 85 | 85 |
| | Period (min.) | 5 | 5 | 5 |
| | Amount of water (*n* times with respect to *Matcha*) | 80 | 80 | 80 |
| | Centrifugation | Yes | No | No |
| Evaluation results | Appearance (immediately after sterilization) | +++ | + | ± to ± |

### Test Example 7: Effects of zinc amount

Different liquid extracts (samples 13 to 20) were prepared with addition of a zinc yeast by the same procedure as in Test Example 1 except that the amounts used of *Matcha* powder and a zinc yeast were varied as shown in Table 7. The prepared liquid extracts were evaluated for appearance immediately after sterilization by following the same procedure as in Test Example 1. The results are shown in Table 7. It was suggested that when zinc is added in an amount of approximately from 0.0001 to 1 wt. part per wt. part of a plant powder, liquid plant extracts having a bright green color can be prepared.

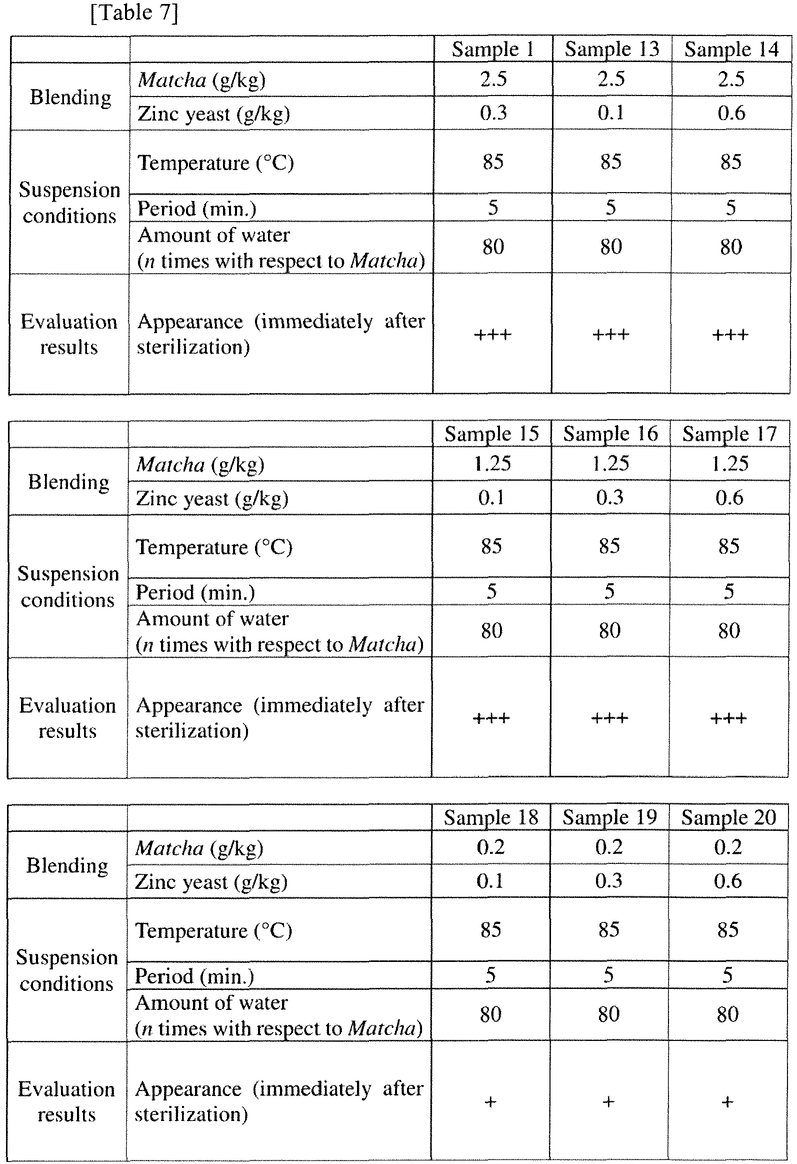

### Test Example 8: Preparation of concentrated essences

The liquid extracts (sample 1, sample 15) prepared in Test Examples 1 and 7 were concentrated to give concentrated essences. To be specific, the liquid extracts (sample 1, sample 15) were concentrated to Brix 5 using an evaporator (high performance centrifugal evaporator EZ-2 Series; produced by Scrum Inc.) under the following conditions: Set Maxtemp: 60°C, and Mode: Aqueous. The obtained essences were heat sterilized and stored at 55°C for one week. The essences were evaluated for appearance immediately after sterilization and after storage by the panelists. The plant extracts, even after concentration, maintained their appearance with a refreshing cooling sensation, which is characteristic of the present invention.

### Test Example 9: Production of a tea beverage

A packaged tea beverage was produced using the liquid extract of sample 1 which was prepared in Test Example 1 through taking the grinding step (a), the suspension step (b), and the solid-liquid separation step (c). To be specific, 200 g of the liquid extract of sample 1 in Test Example 1 was mixed with 800 g of water, an antioxidant (ascorbic acid), and a pH adjustor (sodium hydrogen carbonate), and the mixture was adjusted to pH 6.4. The mixture was packed in a clear PET bottle package and heat sterilized, whereby a packaged tea beverage was obtained. The packaged tea beverage was evaluated for appearance immediately after sterilization and after storage at 55°C for one week, and as a result rated as a beverage having a bright green color with a refreshing cooling sensation. Also, the beverage was tasted and evaluated for its flavor, and as a result rated as an easy-to-drink beverage which was well balanced between the aroma and astringency of *Matcha* and had a quick finish.

### Test Example 10: Effects of the order of steps on degree of green color (1)

As mentioned above, sample 1 in Test Example 1 was prepared by taking the following steps: grinding a chlorophyll-containing plant (*Tencha*) to give a plant powder (*Matcha*) (step (a)); suspending the *Matcha* powder in a solution containing a zinc yeast essence (step (b)); and subjecting the suspension to solid-liquid separation (step (c)), thereby obtaining a liquid *Matcha* extract with a bright green color. In other words, the different steps were performed in the order of (a) => (b) => (c). As a control for comparison, another sample (sample 21) was prepared by following a procedure in which a liquid *Matcha* extract was first prepared and then brought into contact with zinc (*i.e.,* (a) => (c) => (b)). Sample 21 was compared with sample 1 in terms of degree of green color. More specifically, 2.5 g of the *Matcha* powder used in Test Example 1 was metered, mixed with 80 times its volume of warm water (85°C), and stirred (suspended) using a multipurpose stirring system under the same conditions as in Test Example 1. Then, the resulting suspension was centrifuged and filtrated through a filter under the same conditions as in Test Example 1, to thereby separate into extraction residues and a liquid extract. To the liquid extract (supernatant), 0.3 g of the zinc yeast essence used in Test Example 1 was added. For the purpose of determining the degree of green color of samples 1 and 21, the chlorophyll and pheophytin contents in the two samples were analyzed. The procedure for the analysis is described below.

### (Procedure for analysis of chlorophyll and pheophytin contents)

2.25 mL of a sample (liquid extract) was metered in a 50 mL centrifuge tube, where 12.75 mL of acetone was added, and the tube was shaken for 15 minutes and centrifuged (at 3,000 rpm × 10 min.) to collect a supernatant. This procedure was repeated two more times to collect supernatants. The combined supernatants were made up to 50 mL with an aqueous solution of 85% acetone. The solution was concentrated 10-fold and filtrated through a membrane filter (0.45 µm) to obtain an analysis sample, which was analyzed by HPLC.

### <HPLC conditions>

System: Shimadzu LC-10A (SPD-M10A detector)
Analysis column: Tosoh TSKgel ODS-80TM (4.6 mmϕ × 15 cm)
Guard column: Tosoh TSKguardgel ODS-80TM (3.2 mmϕ × 1.5 cm)
Mobile phase: Gradient (gradient elution)
Solvent A (95% ethanol solution containing 0.005 N NaCl)
Solvent B (80% ethanol solution containing 0.005 N NaCl)
(a linear gradient from A:B = 5:95 (v/v) to A:B = 95:5 (v/v) for 10 min., followed by holding A:B = 95:5 (v/v) for 25 min.)
Detection wavelength: 405 nm (pheophytin a) or 425 nm (chlorophyll a, b, pheophytin b)
Temperature: 40°C
Flow rate: 0.8 mL/min.

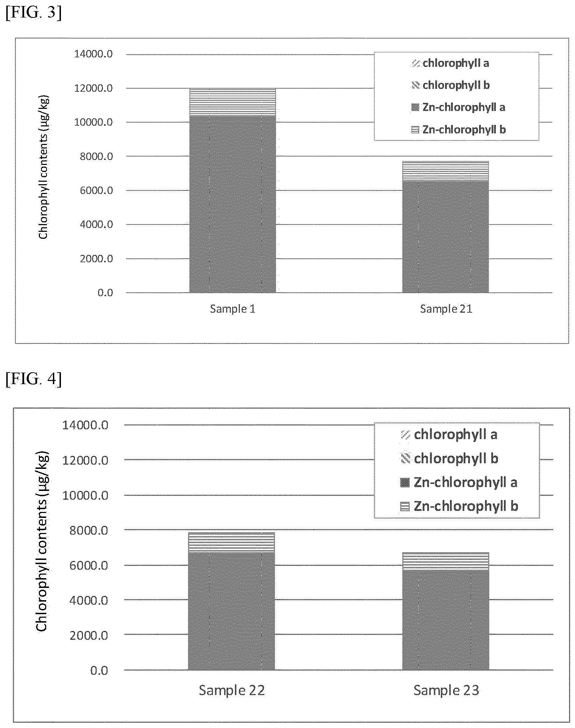

Table 8 and FIG. 3 show the results of analysis of chlorophyll contents. Sample 1 (a chlorophyll-containing liquid extract prepared through the steps in the order of (a) => (b) => (c)) had significantly higher chlorophyll contents than sample 21 (a chlorophyll-containing liquid extract prepared through the steps in the order of (a) => (c) => (b)). Also, the ratio of chlorophyll a (chlorophyll a + Zn-chlorophyll a), which appears blue green, relative to chlorophyll b (chlorophyll b + Zn-chlorophyll b), which appears yellow green, was higher in sample 1. In sample 1, the content of pheophytin (pheophytin a + pheophytin b), which appears yellow-amber, was 411.4 µg/kg -- which was significantly smaller than chlorophyll contents. When observed with the naked eye, sample 1 appeared apparently more deeply green than sample 21. The above results revealed that simultaneously suspending *Matcha* together with a zinc yeast leads to stabilization of chlorophyll in *Matcha* and facilitates elution of chlorophyll.

**[Table 8]**

| | chlorophyll a (µg/kg) | chlorophyll b (µg/kg) | Zn-chlorophyll a (µg/kg) | Zn-chlorophyll b (µg/kg) | chlorophyll a / chlorophyll b |
|---|---|---|---|---|---|
| Sample 1 | ND | ND | 10337.9 | 1682.0 | 6.15 |
| Sample 21 | ND | ND | 6534.3 | 1166.0 | 5.60 |

### Test Example 11: Effects of the order of steps on degree of green color (2)

By following the same procedure as in Test Example 10, except that the temperature of water used to make a suspension was changed to 30°C, samples 22 and 23 were prepared through performing different steps in the following orders, respectively: (a) => (b) => (c); and (a) => (c) => (b). The prepared samples were analyzed for chlorophyll contents in the same way as in Test Example 10. Table 9 and FIG. 4 show the results of analysis of chlorophyll contents. Like in Test Example 10, the chlorophyll contents and the ratio of chlorophyll a (chlorophyll a + Zn-chlorophyll a) to chlorophyll b were higher in the chlorophyll-containing liquid extract (sample 22) prepared through the steps in the order of (a) => (b) => (c), than in the chlorophyll-containing liquid extract (sample 23) prepared through the steps in the order of (a) => (c) => (b). However, these samples were almost indistinguishable to the naked eye.

**[Table 9]**

| | chlorophyll a (µg/kg) | chlorophyll b (µg/kg) | Zn-chlorophyll a (µg/kg) | Zn-chlorophyll b (µg/kg) | chlorophyll a/ chlorophyll b |
|---|---|---|---|---|---|
| Sample 22 | ND | ND | 6694.3 | 1110.1 | 6.03 |
| Sample 23 | ND | ND | 5681.3 | 1000.5 | 5.68 |

### Test Example 12: Effects of suspension temperature on degree of green color

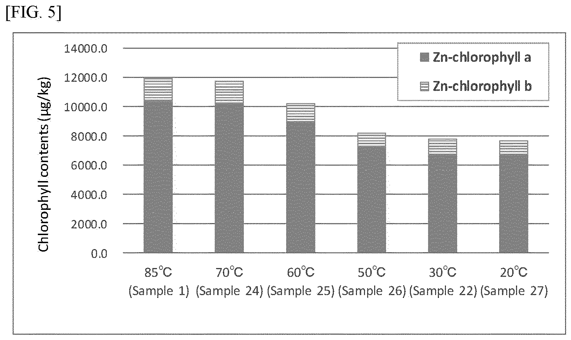

Different liquid *Tencha* (*Matcha*) extracts were prepared through performing different steps in the order of (a) => (b) => (c) by the same procedure as that for sample 22 in Test Example 11, except that the temperature of water used to make a suspension was varied from 20 to 70°C. The prepared liquid extracts were analyzed for chlorophyll contents. The results are shown in FIG. 5. As shown in FIG. 5, it was demonstrated that suspending *Matcha* and a zinc yeast at high temperatures leads to stabilization of chlorophyll in *Matcha* and facilitates elution of chlorophyll. Judging from the fact that chlorophyll eluted in larger volumes at higher temperatures, it was found that the temperature of suspending *Matcha* and a zinc yeast is preferably not less than 60°C, especially preferably not less than 70°C.

## Claims

1. A method for producing a chlorophyll-containing liquid plant extract, the method comprising the following steps (a) to (c):
step (a): a grinding step of grinding a chlorophyll-containing plant to give a plant powder;
step (b): a suspension step of suspending the plant powder in a zinc-containing solution; and
step (c): a solid-liquid separation step of separating the obtained suspension into a solid fraction and a liquid fraction.

2. The method according to claim 1, wherein the chlorophyll-containing plant is a tea leaf.

3. The method according to claim 1 or 2, wherein the zinc is added in the form of a zinc yeast.

4. A liquid plant extract obtained by the method according to any one of claims 1 to 3.

5. A beverage comprising the liquid plant extract according to claim 4.
